# EUROPÄISCHE PATENTANMELDUNG

(11) **EP 1 427 094 A2**
(43) Veröffentlichungstag der Anmeldung: **09.06.2004**
(21) Anmeldenummer: 03026842.9
(22) Anmeldetag: 21.11.2003
(51) Int. Cl.: H02M 7/538, H02M 7/5387

(54) **Verfahren zum Betrieb mehrerer parallelgeschalteter Pulswechselrichter**

(30) Priorität: 06.12.2002 DE 10257210; 05.05.2003 DE 10319969
(71) Anmelder: Loher GmbH, 94099 Ruhstorf/Rott (DE)
(72) Erfinder: Kraus, Ludwig, 94099 Ruhstorf/Rott (DE); Mehl, Tobias, 94152 Neuhaus (DE)
(74) Vertreter: Zinnecker, Armin, Dipl.-Ing.

(57) **Zusammenfassung**

Das Verfahren dient zum Betrieb mehrerer parallelgeschalteter Pulswechselrichter (1, 2). Um ein derartiges Verfahren zu verbessern werden der oder die Einzelströme der Pulswechselrichter (1, 2) oder einer um 1 verminderten Anzahl der Pulswechselrichter (1, 2) geregelt (Fig. 1).

## Beschreibung

Die Erfindung betrifft ein Verfahren zum Betrieb mehrerer parallelgeschalteter Pulwechselrichter. Pulswechselrichter mit Spannungszwischenkreis und abschaltbaren Leistungshalbleitern, insbesondere Thyristoren oder IGTBs, sind bekannt. Durch das Verfahren können zwei oder mehr parallelgeschaltete Pulswechselrichter betrieben werden.

Die Parallelschaltung von zwei oder mehr Pulswechselrichtern bringt Vorteile gegenüber dem Betrieb eines einzelnen Pulswechselrichters. Durch die Parallelschaltung ist es möglich, ohne großen zusätzlichen Entwicklungsaufwand höhere Ausgangsleistungen zu erzielen. Ferner kann durch die Verwendung von zwei oder mehr parallelgeschalteten Pulswechselrichtern, insbesondere durch einen modularen Aufbau von zwei oder mehr Pulswechselrichtern, ein redundantes System bereitgestellt werden, welches selbst bei Ausfall eines Pulswechselrichters noch, eventuell mit reduzierter Ausgangsleistung, weiterarbeiten kann. Zudem können Kosten gespart werden, da bei einem derartigen Ausfall nicht die ganze Anlage, sondern nur der defekte Pulswechselrichter ausgetauscht werden muß.

Aufgabe der Erfindung ist es, ein verbessertes Verfahren zum Betrieb mehrerer parallelgeschalteter Pulswechselrichter vorzuschlagen.

Erfindungsgemäß wird diese Aufgabe dadurch gelöst, daß der oder die Einzelströme der Pulswechselrichter oder einer um 1 verminderten Anzahl der Pulswechselrichter geregelt werden. Das Regelverfahren kann in der Weise durchgeführt werden, daß jeder Einzelstrom jedes Pulswechselrichters geregelt wird. Es ist allerdings auch möglich, daß nur die Einzelströme von n-1 der n parallelgeschalteten Pulswechselrichter geregelt werden.

Vorteilhafte Weiterbildungen sind in den Unteransprüchen beschrieben.

Das Verfahren kann mit zwei Pulswechselrichtern durchgeführt werden. Hierbei ist es möglich, einen oder beide Pulswechselrichter zu regeln. Das Verfahren kann allerdings auch mit mehr als zwei Pulswechselrichtern durchgeführt werden.

Bei den parallelgeschalteten Pulswechselrichtern kann es sich um Pulswechselrichter gleicher und/oder beliebiger (verschiedener) Leistung handeln. Die Leistungsaufteilung/Stromaufteilung zwischen den Pulswechselrichtern kann gleich und/oder beliebig (verschieden) sein. In bestimmten Anwendungsfällen kann es allerdings vorteilhaft sein, wenn Pulswechselrichter gleicher Leistung verwendet werden. Das Verfahren kann auch in der Weise durchgeführt werden, dass eine Kombination von Pulswechselrichtern beliebiger Leistung und/oder gleicher Leistung verwendet wird. Ferner ist es möglich, dass das Verfahren eine beliebige Aufteilung der Einzelströme oder auch eine gleichmässige Aufteilung der Einzelströme beinhaltet, und zwar auch unabhängig davon, ob es sich um Pulswechselrichter gleicher oder beliebiger Leistung handelt.

Der Gesamtstrom kann auf die Pulswechselrichter beliebig aufgeteilt werden. In bestimmten Anwendungsfällen kann es allerdings vorteilhaft sein, wenn der Gesamtstrom auf die Pulswechselrichter gleicher Leistung gleichmäßig aufgeteilt wird.
Vorzugsweise wird jeder Pulswechselrichter getrennt geregelt.

Eine weitere vorteilhafte Weiterbildung ist dadurch gekennzeichnet, daß die Eingangsgröße der Regelung von der Differenz zwischen dem Sollwert und dem Istwert des jeweiligen Ausgangsstromes und von dem Pulsmuster gebildet wird.

Vorteilhaft ist es, wenn die Ansteuerflanken der Leistungshalbleiter in dem oder den Pulswechselrichtern verschoben werden.

Vorzugsweise wird jede Phase eines, mehrerer oder aller Pulswechselrichter einzeln geregelt.

Eine weitere vorteilhafte Weiterbildung ist dadurch gekennzeichnet, daß die Verstärkungsfaktoren der Regelung von äußeren Randbedingungen abhängig sind.

Das erfindungsgemäße Regelverfahren ermöglicht es, mehrere Pulswechselrichter parallelzuschalten und die Einzelströme zu regeln, vorzugsweise durch definierte Verschiebung der zugehörigen Ansteuersignalflanken. Prinzipiell sind die Einzelströme frei wählbar; Randbedingung ist lediglich, daß deren Summe gleich dem Gesamtstrom ist. Eine mögliche Anwendung besteht darin, daß sich der Gesamtstrom auf eine Anzahl parallelgeschalteter Pulswechselrichter aufteilt. Vorzugsweise teilt sich der Gesamtstrom auf eine Anzahl parallelgeschalteter Pulswechselrichter gleicher Leistung gleichmäßig auf.

Die Regelung kann für jeden Pulswechselrichter getrennt erfolgen. Als Eingangsgrößen werden vorzugsweise die Differenz zwischen Sollwert und Istwert des jeweiligen Ausgangsstromes und ein Pulsmuster, vorzugsweise das von der übergeordneten Steuerung oder Regelung erzeugte Pulsmuster verwendet. Wenn Pulswechselrichter gleicher Leistung verwendet werden, kann als Sollwert der Mittelwert der Einzelströme verwendet werden.

Es ist möglich, jede Phase eines bzw. mehrerer bzw. aller Pulswechselrichter einzeln zu regeln. Bei zwei parallelgeschalteten, dreiphasigen Pulswechselrichtern gibt es also insgesamt sechs Regler. Die Ausgangsgröße des Reglers kann dann die Verschiebung der Ansteuerflanken der verwendeten abschaltbaren Leistungshalbleiter bestimmen.

Das Regelverfahren kann auch in der Weise durchgeführt werden, daß einer der parallelgeschalteten Pulswechselrichter nicht geregelt wird. Es funktioniert auch in diesem Fall. Das Verfahren kann in der Weise durchgeführt werden, daß in dem oder den anderen Pulswechselrichtern die Ströme entsprechend der Stromverteilung ausgeregelt werden. Da der Gesamtstrom von dieser Regelung unabhängig ist, stellt sich der Strom im ungeregelten Pulswechselrichter damit automatisch als Differenz zwischen dem Gesamtstrom und der Summe der geregelten Ströme ein. Der Gesamtstrom muß nicht unverändert bleiben. Er kann beispielsweise sinusförmig sein.

Bei vorbekannten Lösungen wird die Parallelschaltung von Pulswechselrichtern ohne zusätzliche Regelung aufgebaut. Dies bedeutet dann aber, daß die Anlage deutlich überdimensioniert werden muß. Zum anderen ist es erforderlich, die Leistungshalbleiter zu selektieren. Trotzdem kann sich bei gleichzeitiger Ansteuerung der Module aufgrund von Toleranzen, Erwärmungen, unterschiedlichen Signallaufzeiten etc. eine Stromverteilung einstellen, die zu einer Überlastung der einzelnen Pulswechselrichter führt.

Durch das erfindungsgemäße Regelverfahren kann der Vorteil erreicht werden, daß die Stromverteilung in den einzelnen Pulswechselrichtern beliebig geregelt werden kann. Es ist also eine Gleichverteilung möglich. Es besteht allerdings auch die Möglichkeit, im Betrieb auf unterschiedliche Randbedingungen, z.B. unterschiedli-che Temperaturen, Signallaufzeiten etc., zu reagieren.

Ein Ausführungsbeispiel der Erfindung wird nachstehend anhand der beigefügten Zeichnung im einzelnen erläutert. In der Zeichnung zeigt
- Fig. 1: den Schaltplan einer Parallelschaltung zweier einphasiger Pulswechselrichter mit IGBTs, Freilaufdioden und Ausgangsdrosseln,
- Fig. 2: den zeitlichen Verlauf der Zündimpulse und
- Fig. 3: ein Blockschaltbild des Regelverfahrens.

Da die Regelung unabhängig von der Phasenanzahl des Pulswechselrichters ist, wird sie nachfolgend am Beispiel einer Phase beschrieben. Aus Gründen der Übersichtlichkeit werden die Verhältnisse an einer Parallelschaltung von nur zwei Pulswechselrichtern gleicher Leistung erläutert, die mit IGBTs und geeigneten Freilaufdioden aufgebaut sind.

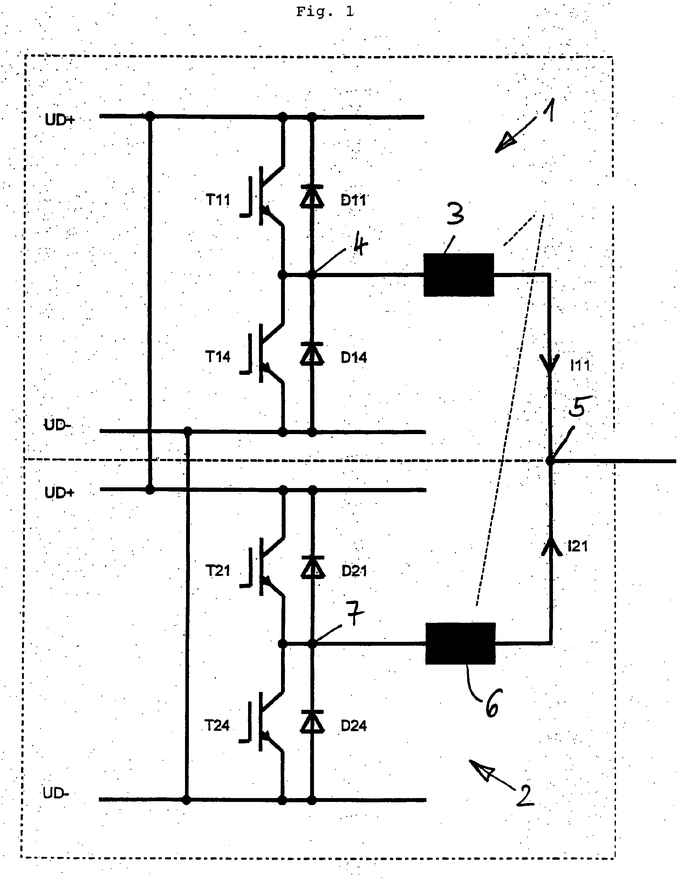

In Fig. 1 ist ein erster einphasiger Pulswechselrichter 1 mit einem zweiten einphasigen Pulswechselrichter 2 parallelgeschaltet. Der erste Pulswechselrichter 1 umfaßt einen ersten IGBT T11 und einen zweiten IGBT T14, die in Reihe geschaltet sind und die zwischen der positiven Spannung UD+ und der negativen Spannung UDliegen. Den IGBTs T11 und T14 sind jeweils eine Diode D11 und D14 parallelgeschaltet, und zwar jeweils in Richtung von UD- zu UD+-. Eine Ausgangsdrossel 3 liegt zwischen dem Verbindungspunkt 4 zwischen T11/D11 und T14/D14 und dem Ausgang 5. Der zweite Pulswechselrichter 2 ist entsprechend aufgebaut, mit zwei in Reihe geschalteten IGBTs T21 und T24 zwischen UD+ und UD- und zwei jeweils parallelgeschalteten Dioden D21 und D24 in Richtung von UD- zu UD+. Die zweite Ausgangsdrossel 6 liegt zwischen dem Verbindungs-punkt 7 zwischen T21/D21 und T24/D24 und dem Ausgang 5. Von der ersten Aus-gangsdrossel 3 zum Ausgang 5 fließt der erste Strom I11. Von der zweiten Aus-gangsdrossel 6 zum Ausgang 5 fließt der zweite Ausgangsstrom 121.

Das Regelverfahren wird in folgender Weise durchgeführt: Wenn der Istwert des Stroms I11 größer ist als der Sollwert, werden die Einschaltflanke von T11 und die Ausschaltflanke von T14 jeweils verzögert. Die Ausschaltflanke von T11 und die Einschaltflanke von T14 bleiben unverzögert. Wenn der Istwert des Stromes I11 kleiner ist als der Sollwert, bleiben die Einschaltflanke von T11 und die Ausschaltflanke von T14 unverzögert. Die Ausschaltflanke von T11 und die Einschaltflanke von T14 werden jeweils verzögert.

Für den Pulswechselrichter 2 ergeben sich entsprechende Verhältnisse. Wenn der Istwert des Stromes I21 größer ist als der Sollwert, werden die Einschaltflanke von T21 und die Ausschaltflanke von T24 jeweils verzögert. Die Ausschaltflanke von T21 und die Einschaltflanke von T24 bleiben jeweils unverzögert. Wenn der Istwert des Stromes I21 kleiner ist als der Sollwert, bleiben die Einschaltflanke von T21 und die Ausschaltflanke von T24 unverzögert. Die Ausschaltflanke von T21 und die Einschaltflanke von T24 werden jeweils verzögert.

Wenn der Istwert des Stromes 111 gleich dem Sollwert ist, bleiben die Einschaltflanken von T11 und T14 und die Ausschaltflanken von T11 und T14 jeweils unverzögert. In entsprechender Weise bleiben die Einschaltflanken von T21 und T24 und die Ausschaltflanken von T21 und T24 jeweils unverzögert, wenn der Istwert des Stromes I21 gleich dem Sollwert ist.

Die nachfolgende Tabelle faßt dies zusammen. Sie gibt an, unter welchen Bedingungen die Ansteuersignale für die betrachteten Pulswechselrichter gegenüber den Signalen der übergeordneten Pulsmustererzeugung verändert werden. Für beide Pulswechselrichter ergibt sich die gleiche Tabelle:

| Strom Pulswechselrichter (I11 bzw. I21) | Einschaltflanke T11 bzw. T21 Ausschaltflanke T14 bzw. T24 | Ausschaltflanke T11 bzw. T21 Einschaltflanke T14 bzw. T24 |
|---|---|---|
| Istwert > Sollwert | verzögert | unverzögert |
| Istwert = Sollwert | unverzögert | unverzögert |
| Istwert < Sollwert | unverzögert | verzögert |

Bei einer unsymmetrischen Stromverteilung haben die beiden Pulswechselrichter Soll-Ist-Abweichungen entgegengesetzter Polarität.

Durch die jeweiligen Regler werden die Schaltflanken bzw. Ansteuerflanken entsprechend obiger Tabelle gegenüber dem ursprünglichen Pulsmuster verschoben.

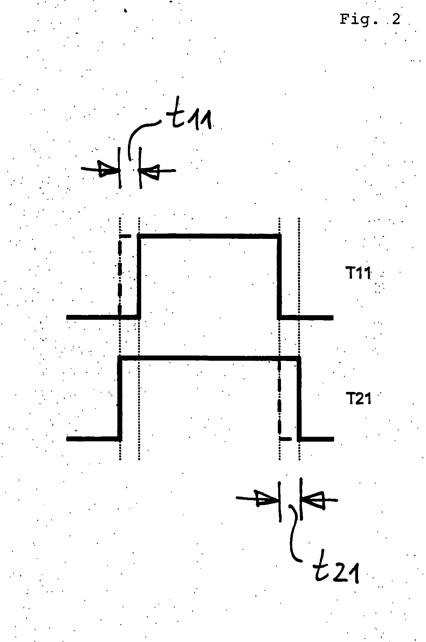

In Fig. 2 sind die Zündimpulse der IGBTs T11 und T21 für den Fall eines zu großen Stromes I11 und eines zu kleinen Stromes I21 dargestellt. Die ursprünglichen Zündimpulse sind gestrichelt gezeichnet, die geregelten Zündimpulse sind durchgezogen gezeichnet. Da der Istwert des Stromes I11 größer ist als der Sollwert, wird die Einschaltflanke von T11 um die Zeitspanne t11 verzögert. Die Ausschaltflanke von T11 bleibt unverzögert. Da der Istwert des Stromes I21 kleiner ist als der Sollwert, bleibt die Einschaltflanke von T21 unverzögert. Die Ausschaltflanke von T21 wird um die Zeitspanne t21 verzögert. Die Zeitspannen t11 und t21 können gleich groß sein.

Durch die unterschiedlichen Schaltzeitpunkte der Pulswechselrichter entsteht an den Ausgangsdrosseln eine Spannungszeitfläche. Diese bewirkt eine Stromänderung in beiden Drosseln in Richtung Abbau der Soll-Ist-Abweichung; der Gesamtstrom bleibt unverändert.

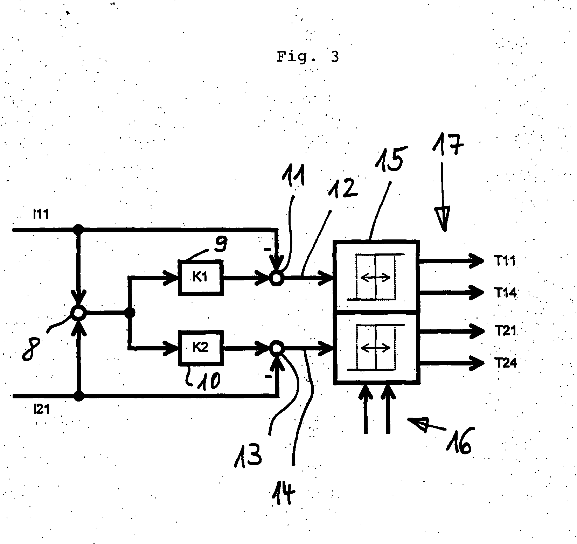

Für das beschriebene Beispiel mit zwei parallelgeschalteten Pulswechselrichtern zeigt Fig. 3 das zugehörige Blockschaltbild des Regelverfahrens. Die Ist-Ströme I11 und 121 werden in dem Summierglied 8 summiert. Die Summe wird den Verstärkern 9 und 10 zugeführt, wo sie um die Faktoren K1 und K2 verstärkt wird. Der Ausgang des Verstärkers 9 wird dem Differenzglied 11 zugeführt, in dem die Differenz 12 zwischen dem Ausgangswert des Verstärkers 9 und dem Ist-Strom I11 gebildet wird. Der Ausgang des Verstärkers 10 wird dem Differenzglied 13 zuge-führt, in dem die Differenz 14 zwischen dem Ausgangswert des Verstärkers 10 und dem Ist-Strom I21 gebildet wird.

Die Differenzen 12 und 14 werden dem Regler 15 zugeführt, dem ferner das Pulsmuster 16 zugeführt wird. Der Regler erzeugt Ansteuerimpulse 17 für die IGBTs T11 , T14, T21 und T24, und zwar in der beschriebenen Weise einer Verschiebung der Einschaltflanken bzw. Ausschaltflanken.

Die Faktoren K1 und K2 können konstant sein. Sie können gleich groß sein. Es ist allerdings auch möglich, daß die Faktoren K1 und K2 nicht konstant sind. Das Regelverfahren besitzt in diesem Fall die Fähigkeit, im Betrieb auf sich ändernde Umgebungsbedingungen reagieren zu können. So ist es beispielsweise möglich, die Temperatur der einzelnen Leistungshalbleiter (IGBTs) mit in die Sollwertbildung einzubeziehen. Die Faktoren K1 und K2 sind dann temperaturabhängig, und zwar derart, daß zu warme Leistungshalbleiter mit weniger Strom beaufschlagt werden.

Durch die Erfindung kann ein Regelverfahren zum Parallelschalten von Pulswechselrichtern über Ausgangsdrosseln realisiert werden, bei dem das Pulsmuster spannungsabhängig von einer übergeordneten Steuerung erzeugt und in einer für jeden Pulswechselrichter separaten untergeordneten Steuerung teilstromabhängig korrigiert wird. Die Spannungen und Ströme der parallelgeschalteten Pulswechselrichter können beliebig sein, wobei insbesondere auch Pulswechselrichter unterschiedlicher Ausgangsleistung parallelgeschaltet werden können. Die Pulsfrequenz kann in einem Bereich von 500 Hz bis 20 kHz liegen. Es ist möglich, daß bei allen n parallelgeschalteten Pulswechselrichtern eine teilstromabhängige Pulsmusterkorrektur stattfindet. Es ist allerdings auch möglich, daß nur bei n-1 Pulswechselrichtern eine teilstromabhängige Pulsmusterkorrektur stattfindet, so daß einer der Pulswechselrichter unkorrigiert betrieben wird. Die Pulsmusterkorrektur kann abhängig von äußeren Randbedingungen sein, insbesondere von Temperatur, Beschädigungen und/oder unterschiedlichen Signallaufzeiten.

## Patentansprüche

1. Verfahren zum Betrieb mehrerer (n) parallelgeschalteter Pulswechselrichter (1,2),
**dadurch gekennzeichnet,**
**daß** der oder die Einzelströme der (n) Pulswechselrichter (1, 2) oder einer um 1 verminderten Anzahl (n-1) der Pulswechselrichter (1, 2) geregelt werden.

2. Verfahren nach Anspruch 1, **dadurch gekennzeichnet, daß** der oder die Einzelströme von zwei Pulswechselrichtern (1, 2) geregelt werden.

3. Verfahren nach Anspruch 1 oder 2, **gekennzeichnet durch** Pulswechselrichter (1, 2) gleicher Leistung.

4. Verfahren nach Anspruch 3, **dadurch gekennzeichnet, daß** der Gesamtstrom auf die Pulswechselrichter (1, 2) gleicher Leistung gleichmäßig aufgeteilt wird.

5. Verfahren nach einem der vorhergehenden Ansprüche, **dadurch gekennzeichnet, daß** jeder Pulswechselrichter (1, 2) getrennt geregelt wird.

6. Verfahren nach einem der vorhergehenden Ansprüche, **dadurch gekennzeichnet, daß** die Eingangsgröße der Regelung von der Differenz zwischen dem Soll-Wert und dem Ist-Wert des jeweiligen Ausgangsstromes und von dem Pulsmuster gebildet wird.

7. Verfahren nach einem der vorhergehenden Ansprüche, **dadurch gekennzeichnet, daß** die Ansteuerflanken der Leistungshalbleiter (T11, T14, T21, T24) in dem oder den Pulswechselrichtern. (1, 2) verschoben werden.

8. Verfahren nach einem der vorhergehenden Ansprüche, **dadurch gekennzeichnet, daß** jede Phase eines, mehrerer oder aller Pulswechselrichter (1, 2) einzeln geregelt wird.

9. Verfahren nach einem der vorhergehenden Ansprüche, **dadurch gekennzeichnet, daß** die Verstärkungsfaktoren (K1, K2) der Regelung von äußeren Randbedingungen abhängig sind.
